# EUROPÄISCHE PATENTSCHRIFT

(11) **EP 1 632 702 B1**
(45) Veröffentlichungstag und Bekanntmachung des Hinweises auf die Patenterteilung: **18.04.2007**
(21) Anmeldenummer: 05018228.6
(22) Anmeldetag: 23.08.2005
(51) Int. Cl.: F16K 31/00, F16K 11/044, G05D 23/13

(54) **Mischventil**
Mixing valve
Robinet mitigeur

(30) Priorität: 02.09.2004 DE 102004042961
(43) Veröffentlichungstag der Anmeldung: 08.03.2006
(73) Patentinhaber: Grohe AG, 58675 Hemer (DE)
(72) Erfinder: Kahle, Dieter, 58675 Hemer (DE); Frankholz, Christian, 58730 Fröndenberg (DE); Jensen, Hans-Jürgen, 59514 Welver (DE); Huck, Kai, 58300 Wetter (DE); Mennigmann, Kurt, 58730 Fröndenberg (DE)

(56) Entgegenhaltungen:
- DE-A1- 10 228 212
- US-A- 3 364 948
- PATENT ABSTRACTS OF JAPAN Bd. 2000, Nr. 15, 6. April 2001 (2001-04-06) & JP 2000 337535 A (NTC KOGYO KK), 5. Dezember 2000 (2000-12-05)
- PATENT ABSTRACTS OF JAPAN Bd. 010, Nr. 130 (M-478), 14. Mai 1986 (1986-05-14) & JP 60 256512 A (SANSHIN KOGYO KK), 18. Dezember 1985 (1985-12-18)

## Beschreibung

Die Erfindung betrifft ein Mischventil für Kalt- und Heißwasser mit thermostatischer Regelung der Mischwassertemperatur gemäß dem Oberbegriff des Anspruchs1.

Ein solches Mischventil wurde bereits in JP 2000 337535 offenbart.

Andere Mischventile sind aus den Druckschriften EP 0 242 680 A2 und DE 102 28 212 A1 bekannt. Bei diesen bekannten Mischventilen ist der Doppelventilsitzschieber mittels Gewinde oder von einer Schraubenfeder gegen einen Anschlag am Thermostaten gedrückt. Diese Anordnung ist kostenaufwendig und wenig geeignet für eine automatisierte Montage des Doppelventilsitzschiebers auf dem Thermostaten.

Der Erfindung liegt die Aufgabe zugrunde, das im Oberbegriff des Anspruchs 1 angegebenen Mischventil zu verbessern und insbesondere so auszubilden, dass eine kostengünstigere Herstellung und genaue Montage ermöglicht wird.
Diese Aufgabe wird bei einem gattungsgemäßen Mischventil dadurch gelöst, dass zwischen dem Doppelventilsitzschieber und dem Thermostaten über einen gummielastischen Ring eine axial und radial spielfreie Verbindung vorgesehen ist.
Weitere Ausgestaltungen der Erfindung sind in den Ansprüchen 2 bis 11 angegeben.

Mit dem Einsatz des gummielastischen Ringes zusammen mit dem Sprengring kann eine einfach herstellbare und eine sichere automatisierte Montage ermöglichende Steckverbindung zwischen dem Doppelsitzventilschieber und dem Thermostaten gebildet werden. Mit dem gummielastischen Ring können ferner Fertigungstoleranzen kompensiert werden, wobei eine axial als auch radial spielfreie Verbindung zwischen dem Doppelsitzventilschieber und dem Thermostat hergestellt werden kann. Mit Hilfe der flexiblen Halterung über dem gummielastischen Ring können auch in einem gewissen Bereich Schiefstellungen des Doppelventilsitzschiebers zum Thermostaten ermöglicht werden, so dass die Schieberkanten an den zugehörigen Ventilsitzen dicht zur Anlage gelangen können. Die exakte axiale Sicherung des Doppelventilsitzschiebers am Thermostaten erfolgt dabei von dem am Thermostaten gehaltenen Sprengring.

In einer bevorzugten Ausgestaltung der Erfindung kann der Doppelventilsitzschieber mit einem nach innen vorstehenden Flansch versehen werden, der in der Stecklage radial zwischen dem Sprengring und dem gummielastischen Ring einfasst. Um ein relativ einfaches Verpressen des gummielastischen Ringes zu erreichen, kann vorteilhaft die Stirnseite des Thermostaten konisch ausgebildet sein.

In einer weiteren bevorzugten Ausgestaltung der Erfindung, bei der im Mischventil zur Erreichung einer besonders hohen Regelgüte hinter den Einströmquerschnitten das Kaltwasser und das Heißwasser von separaten Öffnungen im Doppelventilsitzschieber aufgenommen und beim Durchtritt durch eine am Doppelventilsitzschieber vorgesehene Trennhülse zu temperiertem Mischwasser gemischt und an den Thermostaten abgegeben wird, kann mit dem gummielastischen Ring gleichzeitig eine Abdichtung des Kaltwasserbereiches zum Temperaturfühler des Thermostaten erzielt werden.
Die separaten Öffnungen an den beiden Stirnseiten des Doppelventilsitzschiebers können hierbei zweckmäßig als Schrägschlitze ausgebildet sein, die sich in der Wandung der Trennhülse treffen und einen ringschlitzförmigen Durchtritt des hier gemischten Kalt- und Heißwassers zum stromaufwärts gelegenen Bereich des Temperaturfühlers des Thermostaten abgeben, so dass der Doppelventilsitzschieber kostengünstig einstückig aus Kunststoff hergestellt werden kann.
Die Schrägschlitze können zweckmäßig mit einem Winkel von 20° bis 50° zur Mittelachse geneigt angeordnet werden. Vorteilhaft werden an jeder der beiden Stirnseiten jeweils vier symmetrisch angeordnete ringsegmentförmige Schrägschlitze vorgesehen.

Ein Ausführungsbeispiel der Erfindung ist in der Zeichnung dargestellt und wird im folgenden näher beschrieben. Es zeigt in der Zeichnung
- Figur 1: ein thermostatgeregeltes Mischventil in schematischer Darstellung im Längsschnitt;
- Figur 2: die in Figur 1 gezeigte Baugruppe aus dem Thermostaten und dem Doppelventilsitzschieber;
- Figur 3: die in Figur 2 gezeigte Baugruppe in Perspektivansicht;

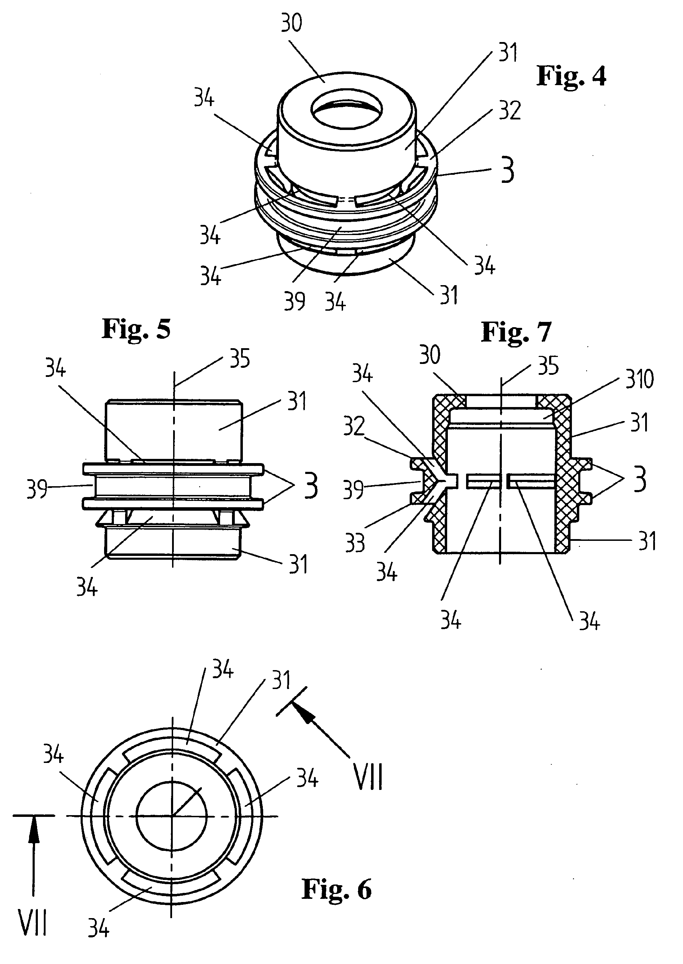

- Figur4: den in Figur 2 gezeigten Doppelventilsitzschieber in Perspektivansicht;
- Figur 5: den in Figur 4 gezeigten Doppelventilsitzschieber in Seitenansicht;
- Figur 6: den in Figur 5 gezeigten Doppelventilsitzschieber in Ansicht von oben;
- Figur 7: den in Figur 6 gezeigten Doppelventilsitzschieber in der Schnittebenen VII.

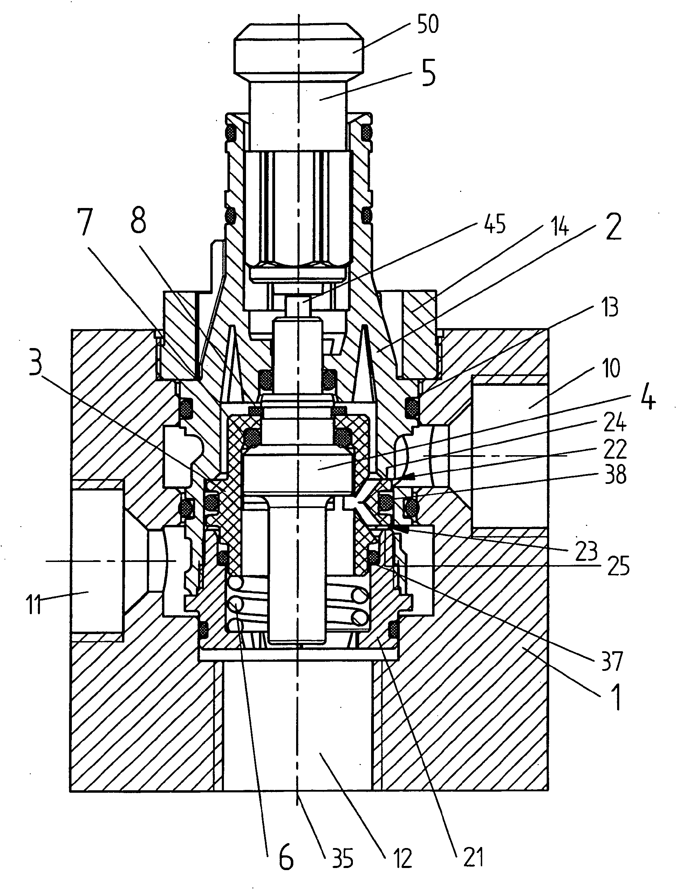

Das in Figur 1 gezeigte thermostatgeregelte Mischventil enthält ein Gehäuse 1 mit einem Kaltwassereinlass 10, einem Heißwassereinlass 11 und einem Mischwasserauslass 12. In einer Aufnahmebohrung 13 ist ein Ventilkartuschengehäuse 2 einer Ventilkartusche gedichtet angeordnet. Zur Axialsicherung des Ventilkartuschengehäuses 2 ist in dem Gehäuse 1 mittels Gewinde eine Ringschraube 14 vorgesehen.

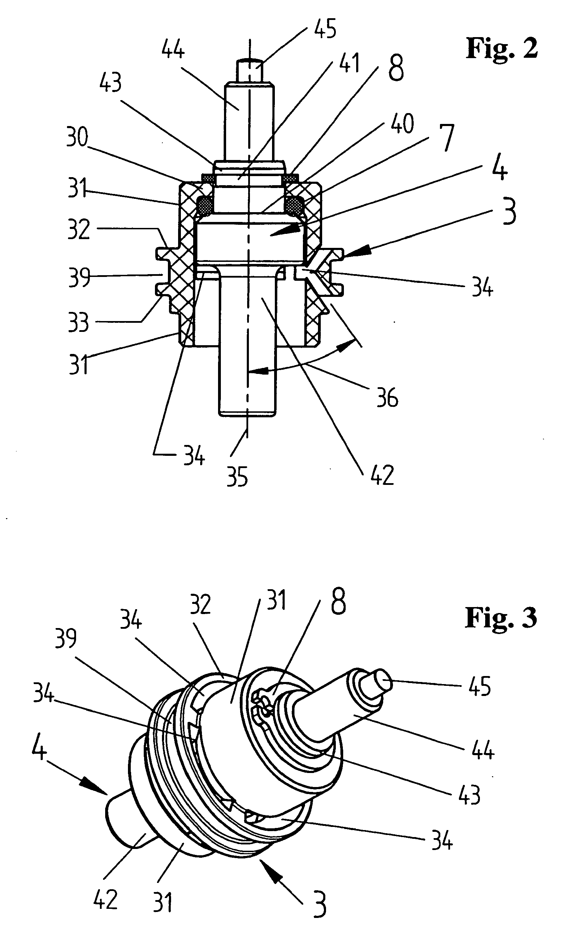

Das Ventilkartuschengehäuse 2 ist am stromabwärtsgelegenen Endbereich mit einem Deckel 21 verschlossen. In der Mantelfläche des Ventilkartuschengehäuses 2 ist ein Einlassquerschnitt 22, der mit dem Kaltwassereinlass 10 in Verbindung steht, und ein Einlassquerschnitt 23, der mit dem Heißwassereinlass 11 in Verbindung steht, vorgesehen. An dem Ventilkartuschengehäuse 2 ist eine Schulter 24 als Kaltwasserventilsitz und an dem Deckel 21 eine Schulter 25 als Heißwasserventilsitz ausgebildet. In dem Freiraum zwischen den beiden Schultern 24, 25 ist ein Doppelventilsitzschieber 3 angeordnet, dessen beide parallel angeordnete Stirnseiten 32, 33 die beiden Einlassquerschnitte 22, 23 bestimmen. Bei einer Axialbewegung des Doppelventilsitzschiebers 3 relativ zum Ventilkartuschengehäuse 2 verändern sich somit die beiden Einlassquerschnitte 22, 23 gegenläufig.
An dem Doppelventilsitzschieber 3 ist jeweils an einer Stirnseite 32, 33 eine Trennhülse 31 mit verringertem Durchmesser angeformt. Mit der Trennhülse 31 wird das je entsprechend den Einlassquerschnitten 22, 23 dosiert zugeführte Kaltwasser und Heißwasser vom Thermostaten 4 abgeschirmt. Zu diesem Zweck ist die Trennhülse einerseits über einen O-Ring 37 zur Innenwandung des Deckels 21 und andererseits mit einem gummielastischen Ring 7 zu dem Thermostaten 4 abgedichtet. Außerdem werden von einem in einer Ringnut 39 des Doppelventilsitzschiebers 3 angeordneten O-Ring, der dichtend in der Innenwandung des Ventilkartuschengehäuses 2 anliegt, der Kaltwasserzuflussraum vom Heißwasserzuflussraum getrennt.
Das zuströmende Kaltwasser kann somit nur durch stromabwärts hinter dem Doppelventilsitzschieber 3 in der Stirnseite 32 angeordnete ringförmige Schrägschlitze 34 und das zuströmende Heißwasser nur durch stromabwärts hinter dem Doppelventilsitzschieber 3 im Bereich der Stirnseite 33 angeordnete ringförmige Schrägschlitze 34 abfließen. Die Schrägschlitze 34 durchdringen dabei die Trennhülse 31 und vereinigen sich kurz vor dem Austritt an der inneren Ringwandung der Trennhülse 31, so dass im Bereich der Trennhülse 31 eine Mischung von Kalt- und Heißwasser zu temperiertem Mischwasser erfolgt, welches dann radial zum stromaufwärts gelegenen Bereich eines Temperaturfühlers 42 des Thermostaten 4 austritt. Die Schrägschlitze 34 sind zur Mittelachse 35 mit einem Winkel 36 von etwa 45° geneigt ausgebildet, wie es insbesondere aus Figur 2 der Zeichnung zu entnehmen ist.
Im Bereich des gummielastischen Rings 7 weist die Trennhülse 31 einen nach innen vorstehenden Flansch 30 auf, der so ausgebildet ist, dass der Thermostat 4 von der Seite mit der erweiterten Öffnung aus in die Trennhülse 31 mit dem Ring 7 eingeschoben werden kann. Für die Aufnahme des Rings 7 in der Trennhülse 31 ist im Bereich des Flansches 30 die Öffnung mit einem im Durchmesser verringerten Teil 310 versehen, so dass eine radiale Verpressung in der Stecklage erfolgt. In der Stecklage durchgreift der Thermostat 4 mit einem Ansatz 43 den Flansch 30, wodurch der gummielastische Ring 7 einerseits von dem Flansch 30 und andererseits von einer Stirnseite 40 des Thermostaten 4 verpresst werden kann. Von der Außenseite her kann dann ein Sprengring 8 in eine Ringnut 41 des Thermostaten 4 zur Axialsicherung eingesetzt werden. Der Doppelsitzventilschieber 3 wird somit sowohl radial als auch axial zum Thermostaten 4 spielfrei gehalten, wie es insbesondere aus Figur 2 der Zeichnung zu entnehmen ist. Die axiale Fixierung des Doppelventilsitzschiebers 3 zum Thermostaten 4 wird dabei vom Sprengring 8 vorgegeben. Da zwischen der Innenwandung der Trennhülse 31 und dem Thermostaten 4 ein Spiel vorgegeben ist, ist ein begrenztes Verschwenken des Doppelventilsitzschiebers 3 zur Mittelachse des Thermostaten 4 möglich, wodurch Fertigungstoleranzen ausgeglichen werden können, so dass beim Aufsetzen des Doppelventilsitzschiebers 3 auf einer Schulter 24 des Kaltwassersitzes oder auf einer Schulter 25 des Heißwassersitzes ein sicherer Abschluss gewährleistet ist.

Die in Figur 2 und 3 dargestellte Baugruppe kann bei entferntem Deckel 21 in das Ventilkartuschengehäuse 2 axial eingeschoben werden, wobei ein Zapfen 44 gedichtet aus dem vom Wasser beaufschlagen Raum des Ventilkartuschengehäuses 2 herausgeführt ist. Sodann wird eine Rückstellfeder 6 gegen die stromabwärts gelegene Stirnseite der Trennhülse 31 geschoben und anschließend der Deckel 21 in das Ventilkartuschengehäuse 2 mittels Gewinde eingeschraubt. Hiernach kann die so komplettierte Ventilkartusche mit dem Ventilkartuschengehäuse 2 in die Aufnahmebohrung 13 des Gehäuses 1 eingeschoben werden, wobei in der Stecklage die einzelnen Zuflusskanäle mit Hilfe von O-Ringen gegeneinander und nach außen abgedichtet sind. Zur Sicherung in der Stecklage wird die Ringschraube 14 in das Gehäuse 1 eingedreht.
Eine Temperaturvorwähleinrichtung 5 ist unverdrehbar aber axial begrenzt verschiebbar in dem Ventilkartuschengehäuse 2 angeordnet. Am äußeren Endbereich der Temperaturvorwählvorrichtung 5 ist ein Bewegungsgewinde 50 ausgebildet, mit dem ein in der Zeichnung nicht dargestellter axial am Ventilkartuschengehäuse 2 gehaltener Drehgriff mit einer Stellmutter in Eingriff steht, so dass durch eine Drehbewegung des Stellgriffes die Temperaturvorwählvorrichtung 5 axial zum Ventilkartuschengehäuse 2 bewegbar ist. Die Axialbewegung wird über einen Stößel 45 auf den Thermostaten 4 und den Doppelsitzventilschieber 3 übertragen, so dass hierdurch die Sollwerttemperatur des Mischwassers einstellbar ist.
Bei einer Mischwasserentnahme aus dem Mischwasserauslass 12 strömen somit durch die Einlassquerschnitte 22, 23 entsprechende Mengen von Kalt- und Heißwasser, so dass die voreingestellte Mischwassertemperatur am Austrittsbereich der Schrägschlitze 34 sich einstellt. Weicht die Isttemperatur von der Sollwerttemperatur ab, so wird diese Temperaturänderung von dem Temperaturfühler 42 des Thermostaten 4 erfasst und entsprechend eine axiale Auslenkung des Stößels 45 erzeugt, so dass sich die Isttemperatur dem Sollwert der Mischwassertemperatur wieder annähert.

## Patentansprüche

1. Mischventil für Kalt- und Heißwasser mit thermostatischer Regelung der Mischwassertemperatur
- durch einen von einer Temperaturvorwählvorrichtung (5) positionierten,
- mit einem Doppelventilsitzschieber (3) verbundenen Thermostaten (4),
- - der in einem Gehäuse (1,2)
- - - mit wenigstens je einem Kalt- und Heißwassereinlass (10,11)
sowie
- - - - wenigstens einem Mischwasserauslass (12) angeordnet ist,
- wobei Einlassquerschnitte (22,23) an beiden Einströmspalten des Mischventils vom Doppelventilsitzschieber (3) mit seinen beiden Stirnseiten (32,33) gegensinnig gesteuert sind, und
- - der Doppelventilsitzschieber (3) auf dem Thermostaten (4) aufgebracht,
- - axial an einer Stirnseite (40) anliegt und
- - über einen Sprengring (8) mit dem Thermostaten (4) verbunden ist,
**dadurch gekennzeichnet, dass**
zwischen dem Doppelventilsitzschieber (3) und dem Thermostaten (4) über einen gummielastischen Ring (7) eine axial und radial spielfreie Verbindung vorgesehen ist.

2. Mischventil nach Anspruch 1, **dadurch gekennzeichnet, dass** zwischen dem Sprengring (8) und dem gummielastischem Ring (7) am Doppelventilsitzschieber (3) an einem rohrförmigen Bereich ein nach innen vorstehender Flansch (30) angeformt ist.

3. Mischventil nach Anspruch 1 oder 2, **dadurch gekennzeichnet, dass** die am Thermostaten (4) ausgebildete Stirnseite (40) für die Anlage des gummielastischen Ringes (7) konisch ausgebildet ist.

4. Mischventil nach wenigstens einem der vorhergehenden Ansprüche, **dadurch gekennzeichnet, dass** der Sprengring (8) von einer im Thermostat (4) ausgebildeten Ringnut (41) aufgenommen ist.

5. Mischventil nach wenigstens einem der vorhergehenden Ansprüche, wobei außerdem stromabwärts hinter den Einströmquerschnitten das Kaltwasser und das Heißwasser von separaten Öffnungen im Doppelventilsitzschieber (3) aufgenommen und beim Durchtritt durch eine am Doppelventilsitzschieber (3) vorgesehene Trennhülse (31) zu temperiertem Wasser gemischt und gerichtet auf den Thermostaten (4) abgegeben ist, **dadurch gekennzeichnet, dass** der gummielastische Ring (7) den von der Trennhülse (31) begrenzten Kaltwasserbereich zum Temperaturfühler (42) des Thermostaten (5) abdichtet.

6. Mischventil nach Anspruch 5, **dadurch gekennzeichnet, dass** für die Aufnahme des Rings (7) in der Trennhülse (31) im Bereich des Flansches (30) die Öffnung in der Trennhülse (31) mit einem im Durchmesser verringerten Teil (310) versehen ist.

7. Mischventil nach Anspruch 5 oder 6, **dadurch gekennzeichnet, dass** die Öffnungen an den beiden Stirnseiten (32, 33) des Doppelventilsitzschiebers (3) stromabwärts hinter den Einlassquerschnitten (22, 23) als ringförmige Schrägschlitze (34) ausgebildet sind, die sich in der Wandung der Trennhülse (31) treffen und den Durchtritt zum stromaufwärts gelegenen Bereich des Temperaturfühlers (42) freigeben.

8. Mischventil nach Anspruch 7, **dadurch gekennzeichnet, dass** an beiden Stirnseiten (32, 33) jeweils symmetrisch angeordnete Schrägschlitze (34) ausgebildet sind.

9. Mischventil nach Anspruch 7 oder 8, **dadurch gekennzeichnet, dass** die Schrägschlitze (34) zur Mittelachse (35) um einen Winkel (36) von 20° bis 50° geneigt angeordnet sind.

10. Mischventil nach wenigstens einem der Ansprüche 7 bis 9, **dadurch gekennzeichnet, dass** jeweils vier Schrägschlitze (34) an einer Stirnseite (32, 33) ausgebildet sind.

11. Mischventil nach wenigstens einem der vorhergehenden Ansprüche, **dadurch gekennzeichnet, dass** der Doppelventilsitzschieber (3) einstückig aus Kunststoff hergestellt ist.

## Claims

1. Mixer valve for cold and hot water, having thermostatic control of the mixed water temperature
- by means of a thermostat (4) that is positioned by means of a temperature-preselecting device (5) and
- is connected to a double valve seat slider (3),
- - which thermostat (4) is arranged in a housing (1, 2)
- - - having at least one cold water inlet and at least one hot water inlet (10,11)
as well as
- - - - at least one mixed water outlet (12),
- inlet cross-sections (22,23) at the two inflow openings of the mixer valve being controlled inversely by the two end faces (32,33) of the double valve seat slider (3), and
- - the double valve seat slider (3) is mounted on the thermostat (4),
- - rests axially against an end face (40) and
- - is connected to the thermostat (4) by way of a spring retaining ring (8),
**characterized in that**
an axially and radially play-free connection between the double valve seat slider (3) and the thermostat (4) is provided by means of a resilient rubber-type ring (7).

2. Mixer valve according to claim 1, **characterized in that** an inwardly projecting flange (30) is formed on the double valve seat slider (3) on a tubular region between the spring retaining ring (8) and the resilient rubber-type ring (7).

3. Mixer valve according to claim 1 or 2, **characterized in that** the end face (40) formed on the thermostat (4) for contact with the resilient rubber-type ring (7) is of tapered shape.

4. Mixer valve according to at least one of the preceding claims, **characterized in that** the spring retaining ring (8) is received by an annular groove (41) formed in the thermostat (4).

5. Mixer valve according to at least one of the preceding claims, wherein, in addition, downstream after the inlet cross-sections, the cold water and the hot water are received by separate openings in the double valve seat slider (3) and, on passing through a separating sleeve (31) provided on the double valve seat slider (3), mixed to form temperature-controlled water and discharged in the direction of the thermostat (4), **characterized in that** the resilient rubber-type ring (7) seals off the cold water region defined by the separating sleeve (31) with respect to the temperature sensor (42) of the thermostat (5).

6. Mixer valve according to claim 5, **characterized in that** to accommodate the ring (7) in the separating sleeve (31), in the region of the flange (30) the opening in the separating sleeve (31) is provided with a portion of reduced diameter (310).

7. Mixer valve according to claim 5 or 6, **characterized in that** the openings at the two end faces (32,33) of the double valve seat slider (3) downstream after the inlet cross-sections (22,23) are formed as annular oblique slots (34) which meet in the wall of the separating sleeve (31) and allow passage to the region of the temperature sensor (42) located upstream.

8. Mixer valve according to claim 7, **characterized in that** symmetrically arranged oblique slots (34) are formed at each of the two end faces (32,33).

9. Mixer valve according to claim 7 or 8, **characterized in that** the oblique slots (34) are arranged inclined at an angle (36) of from 20° to 50° with respect to the central axis (35).

10. Mixer valve according to at least one of claims 7 to 9, **characterized in that** four oblique slots (34) are formed at each end face (32,33).

11. Mixer valve according to at least one of the preceding claims, **characterized in that** the double valve seat slider (3) is made in one piece from plastics material.

## Revendications

1. Mitigeur pour eau froide et eau chaude avec réglage thermostatique de la température de l'eau sortant du robinet par un thermostat (4) positionné par un dispositif de présélection de la température (5) et relié à une vanne à double siège (3), disposée dans un boitier (1, 2) comportant au moins une arrivée d'eau froide et une arrivée d'eau chaude (10, 11) ainsi qu'au moins une sortie d'eau mélangée (12), les sections d'arrivée (22, 23) étant commandées en sens inverse sur deux fentes d'alimentation du mitigeur par le collier à double siège (3) avec ses deux faces avant (32, 33), la vanne à double siège (3) étant placée sur le thermostat (4), en butée axiale sur une face avant (40) et reliée au thermostat (4) par l'intermédiaire d'un circlip (8),
**caractérisé par**
une liaison axialement et radialement sans jeu entre la vanne à double siège (3) et le thermostat (4) par l'intermédiaire d'une bague en caoutchouc élastique (7).

2. Mitigeur selon la revendication 1,
**caractérisé en ce qu'**
une bride (30) en saillie vers l'intérieur est rapportée sur une zone tubulaire, entre le circlip (8) et la bague en caoutchouc élastique (7) sur la vanne à double siège (3).

3. Mitigeur selon la revendication 1 ou la revendication 2,
**caractérisé en ce que**
la face avant (40) du thermostat (4) est conique pour que la bague en caoutchouc élastique (7) puisse venir en butée.

4. Mitigeur selon au moins l'une des revendications précédentes,
**caractérisé en ce que**
le circlip (8) est logé dans une rainure annulaire (41) du thermostat (4).

5. Mitigeur selon au moins l'une des revendications précédentes,
dans lequel l'eau froide et l'eau chaude sont admises en aval des sections d'alimentation, dans la vanne à double siège (3) par des ouvertures séparées et mélangées lors du passage par un manchon de séparation (31), sur la vanne à double siège (3) en une eau tempérée délivrée en fonction du thermostat (4),
**caractérisé en ce que**
la bague en caoutchouc élastique (7) ferme hermétiquement la zone d'eau froide, limitée par le manchon de séparation (31) par rapport à la sonde thermique (42) du thermostat (5).

6. Mitigeur selon la revendication 5,
**caractérisé en ce que**
l'ouverture dans le manchon de séparation (31) est munie d'une pièce (310) au diamètre réduit pour loger la bague (7) dans le manchon de séparation (31) au niveau de la bride (30).

7. Mitigeur selon la revendication 5 ou la revendication 6,
**caractérisé en ce que**
les ouvertures sur les deux faces avant (32, 33) de la vanne à double siège (3) en aval des sections d'alimentation (22, 23) sont des fentes diagonales annulaires (34) qui se rencontrent dans la paroi du manchon de séparation (31) et dégagent le passage vers la zone située en amont de la sonde thermique (42).

8. Mitigeur selon la revendication 7,
**caractérisé en ce que**
des fentes diagonales (34) symétriques sont aménagées respectivement sur les deux faces avant (32, 33).

9. Mitigeur selon la revendication 7 ou la revendication 8,
**caractérisé en ce que**
les fentes diagonales (34) forment, avec l'axe central (35), un angle (36) compris entre 20° et 50°.

10. Mitigeur selon au moins l'une des revendications 7 à 9,
**caractérisé par**
quatre fentes diagonales (34) sur chaque face avant (32, 33).

11. Mitigeur selon au moins l'une quelconque des revendications précédentes,
**caractérisé par**
la vanne à double siège (3) fabriquée d'une seule pièce, en matière plastique.
